# EUROPEAN PATENT APPLICATION

(11) **EP 4 845 281 A1**
(43) Date of publication of application: **25.11.2026**
(21) Application number: 25747727.3
(22) Date of filing: 23.01.2025
(51) Int. Cl.: H04W 72/54

(54) **COMMUNICATION METHOD AND RELATED APPARATUS, STORAGE MEDIUM, AND PROGRAM PRODUCT**

(30) Priority: 31.01.2024 CN 202410152936
(71) Applicant: Huawei Technologies Co., Ltd., Shenzhen, Guangdong 518129 (CN)
(72) Inventor: ZHAI, Bangzhao, Shenzhen, Guangdong 518129 (CN); YU, Xichen, Shenzhen, Guangdong 518129 (CN); HUANG, Xiuxuan, Shenzhen, Guangdong 518129 (CN); DING, Mengying, Shenzhen, Guangdong 518129 (CN); PENG, Jinlin, Shenzhen, Guangdong 518129 (CN)
(74) Representative: Huawei European IPR
(86) International application number: PCT/CN2025/074133
(87) International publication number: WO 2025/162157

(57) **Abstract**

A communication method, a related apparatus, a storage medium, and a program product are provided, and are applied to the field of communication technologies. A communication method includes: A first standard base station receives a second standard band channel parameter from a second standard base station, calculates an inter-band channel measurement auxiliary parameter by using the second standard band channel parameter, sends the inter-band channel measurement auxiliary parameter to user equipment, receives an uplink pilot signal sent by the user equipment with reference to the inter-band channel measurement auxiliary parameter, and performs channel estimation by using the uplink pilot signal and the inter-band channel measurement auxiliary parameter to obtain a first standard band channel parameter. In the solution of embodiments of this application, an inter-band channel measurement auxiliary parameter is obtained based on a correlation between channels of bands used by different standards and by using the second standard band channel parameter, to assist the first standard base station in reducing overheads related to channel measurement, thereby helping improve a capacity and experience of a first standard system.

## Description

This application claims priority to Chinese Patent Application No. 202410152936.X, filed with the China National Intellectual Property Administration on January 31, 2024 and entitled "COMMUNICATION METHOD, RELATED APPARATUS, STORAGE MEDIUM, AND PROGRAM PRODUCT", which is incorporated herein by reference in its entirety.

### TECHNICAL FIELD

This application relates to the field of communication technologies, and in particular, to a communication method, a related apparatus, a storage medium, and a program product.

### BACKGROUND

Currently, 5G networks have been put into large-scale commercial use, and 6G networks are in a laboratory phase. 5G-6G non-standalone networking can improve coverage at an initial stage of 6G. In a process of deploying a high-frequency spectrum network, high-band and low-band joint networking is a preferred form. For example, low bands (for example, sub-6G) may provide basic coverage, such as uplink coverage and downlink blocking/indoor deep coverage caused by user movement. A large bandwidth provided by high bands can provide a user with extremely high-rate transmission experience. In terms of network deployment, a solution of deploying high bands and low bands at a same base station is being commercialized to efficiently reuse resources of existing low-band sites.

### SUMMARY

Embodiments of this application provide a communication method, a related apparatus, a storage medium, and a program product.

A first aspect of embodiments of this application provides a communication method. The method includes: A first standard base station receives a second standard band channel parameter from a second standard base station; the first standard base station calculates an inter-band channel measurement auxiliary parameter by using the second standard band channel parameter; the first standard base station sends the inter-band channel measurement auxiliary parameter to user equipment; the first standard base station receives an uplink pilot signal (where for example, the uplink pilot signal is an uplink sparse pilot signal) sent by the user equipment with reference to the inter-band channel measurement auxiliary parameter; and the first standard base station performs channel estimation by using the uplink pilot signal and the inter-band channel measurement auxiliary parameter to obtain a first standard band channel parameter.

It can be learned that, in the solution of this embodiment of this application, an inter-band channel measurement auxiliary parameter is obtained based on a correlation between channels of bands used by different standards and by using the second standard band channel parameter, to assist the first standard base station in reducing overheads related to channel measurement, thereby helping improve a capacity and experience of a first standard system.

In some possible implementations, the method further includes: The first standard base station receives an inter-band channel auxiliary measurement capability indication sent by the second standard base station or the user equipment, where the inter-band channel auxiliary measurement capability indication indicates that the user equipment has an inter-band channel auxiliary measurement capability.

It can be learned that, in the solution of this embodiment of this application, the first standard base station may learn, based on the inter-band channel auxiliary measurement capability indication, whether the user equipment has the inter-band channel auxiliary measurement capability, so that when the user equipment has the inter-band channel auxiliary measurement capability, the user equipment assists the first standard base station in reducing overheads related to channel measurement, thereby helping improve effectiveness of the inter-band channel measurement auxiliary parameter.

In some possible implementations, the method further includes: The first standard base station receives at least one of the following parameters that are sent by the second standard base station or the user equipment and that are used for calculating the inter-band channel measurement auxiliary parameter: a second standard band, an array element location parameter of the second standard band, a first standard band, and an array element location parameter of the first standard band.

It can be learned that, in the solution of this embodiment of this application, parameters such as the second standard band, the array element location parameter of the second standard band, the first standard band, and the array element location parameter of the first standard band are used for calculating the inter-band channel measurement auxiliary parameter, thereby helping improve effectiveness of the inter-band channel measurement auxiliary parameter.

In some possible implementations, before that the first standard base station sends the inter-band channel measurement auxiliary parameter to the user equipment, the method further includes: determining, based on the first standard band channel parameter and the second standard band channel parameter that is from the second standard base station, that a correlation between a first standard band channel and a second standard band channel satisfies a preset condition.

It can be learned that, in the solution of this embodiment of this application, when the first standard base station determines that the correlation between the first standard band channel and the second standard band channel satisfies the preset condition, the user equipment assists the first standard base station in reducing channel measurement related overheads, thereby helping improve effectiveness of inter-band channel measurement auxiliary parameter.

In some possible implementations, a first standard may be 6G, a second standard may be 5G, the first standard base station may be a 6G base station, and the second standard base station may be a 5G base station. Certainly, the first standard or the second standard may be other different standards, and the first standard base station and the first standard base station may alternatively be base stations in communication systems of other different standards.

A second aspect of embodiments of this application provides a communication method. The method may include: User equipment receives an inter-band channel measurement auxiliary parameter sent by a first standard base station, where the inter-band channel measurement auxiliary parameter is obtained through calculation by using a second standard band channel parameter; and the user equipment sends an uplink pilot signal (where for example, the uplink pilot signal is an uplink sparse pilot signal) to the first standard base station with reference to the inter-band channel measurement auxiliary parameter, where the uplink pilot signal is used for performing channel estimation to obtain a first standard band channel parameter.

In some possible implementations, before that the user equipment receives the inter-band channel measurement auxiliary parameter sent by the first standard base station, the method further includes: The user equipment sends an inter-band channel auxiliary measurement capability indication to the first standard base station, where the inter-band channel auxiliary measurement capability indication indicates that the user equipment has an inter-band channel auxiliary measurement capability.

In some possible implementations, the method may further include: The user equipment sends, to the first standard base station, at least one of the following parameters used for calculating the inter-band channel measurement auxiliary parameter: a second standard band, an array element location parameter of the second standard band, a first standard band, and an array element location parameter of the first standard band. The user equipment may directly send the parameter used for calculating the inter-band channel measurement auxiliary parameter to the first standard base station, or the user equipment may send the parameter used for calculating the inter-band channel measurement auxiliary parameter to the first standard base station through the second standard base station.

In some possible implementations, a correlation between a first standard band channel and a second standard band channel satisfies a preset condition.

A third aspect of embodiments of this application provides a communication method. The method includes: A first standard base station sends an inter-band channel measurement auxiliary instruction to user equipment, where the inter-band channel measurement auxiliary instruction is used for instructing the user equipment to calculate an inter-band channel measurement auxiliary parameter; the first standard base station receives an uplink pilot signal and the inter-band channel measurement auxiliary parameter that are sent by the user equipment; and the first standard base station performs channel estimation by using the uplink pilot signal and the inter-band channel measurement auxiliary parameter to obtain a first standard band channel parameter.

In some possible implementations, the method further includes: The first standard base station receives an inter-band channel auxiliary measurement capability indication sent by the second standard base station or the user equipment, where the inter-band channel auxiliary measurement capability indication indicates that the user equipment has an inter-band channel auxiliary measurement capability.

In some possible implementations, before that the first standard base station sends an inter-band channel measurement auxiliary indication to the user equipment, the method further includes: The first standard base station receives a second standard band channel parameter from the second standard base station; and determines, based on the first standard band channel parameter and the second standard band channel parameter that is from the second standard base station, that a correlation between a first standard band channel and a second standard band channel satisfies a preset condition.

A fourth aspect of embodiments of this application provides a communication method. The method includes: User equipment receives an inter-band channel measurement auxiliary instruction sent by a first standard base station, where the inter-band channel measurement auxiliary instruction is used for instructing the user equipment to calculate an inter-band channel measurement auxiliary parameter; the user equipment receives a downlink pilot signal sent by a second standard base station; the user equipment performs channel estimation by using the downlink pilot signal to obtain a second standard band channel parameter; the user equipment calculates the inter-band channel measurement auxiliary parameter by using the second standard band channel parameter; and the user equipment sends a pilot signal and the inter-band channel measurement auxiliary parameter to the first standard base station, where the pilot signal and the inter-band channel measurement auxiliary parameter are used for performing channel estimation to obtain a first standard band channel parameter.

In some possible implementations, before that the user equipment receives the inter-band channel measurement auxiliary instruction sent by the first standard base station, the method further includes: The user equipment sends an inter-band channel auxiliary measurement capability indication to the first standard base station, where the inter-band channel auxiliary measurement capability indication indicates that the user equipment has an inter-band channel auxiliary measurement capability.

In some possible implementations, a correlation between a first standard band channel and a second standard band channel satisfies a preset condition.

A fifth aspect of embodiments of this application provides a communication device. The communication device includes a processor and a memory that are coupled to each other. The processor is configured to invoke a program stored in the memory, to implement some or all steps of any method according to embodiments of this application.

A sixth aspect of embodiments of this application provides a communication chip. The communication chip is configured to implement some or all steps of any method according to embodiments of this application.

A seventh aspect of embodiments of this application provides a computer-readable storage medium.

The computer-readable storage medium stores a program. When the program is run on a computer, the computer is caused to perform some or all of the steps of any method according to embodiments of this application.

An eighth aspect of embodiments of this application provides a computer program product.

The computer program product includes a computer program. When the computer program is run on a computer, the computer is caused to perform some or all steps of any method according to embodiments of this application.

### BRIEF DESCRIPTION OF DRAWINGS

FIG. 1 is a diagram of an architecture of a joint networking communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application; and
FIG. 6 is a diagram of a communication device according to an embodiment of this application.

### DESCRIPTION OF EMBODIMENTS

The following describes the technical solutions in embodiments of this application with reference to the accompanying drawings in embodiments of this application.

In the specification, claims, and accompanying drawings of this application, terms "first", "second", and the like are intended to distinguish between different objects but do not indicate a particular order.

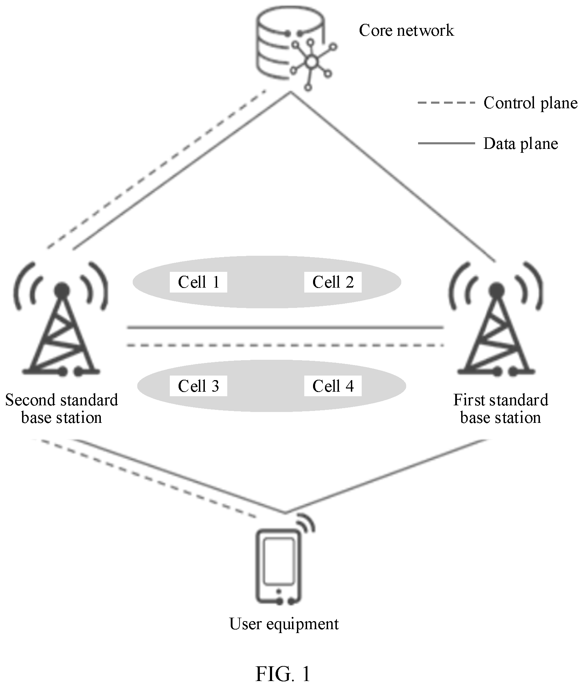

FIG. 1 is a diagram of a network architecture of a communication system according to an embodiment of this application. The communication system is a joint networking system including base stations of at least two standards. For example, the communication system may be a 5G-6G non-standalone (NSA, Non-Standalone) networking system. The communication system includes a communication device that performs wireless communication by using an air interface resource. The communication device may include an access network device and a terminal device, and the access network device may be referred to as a base station or a base station device. The air interface resource may include at least one of a time domain resource, a frequency domain resource, a code resource, and a spatial resource.

The terminal device in embodiments of this application may also be referred to as a terminal, and may be a device having a wireless transceiver function. The terminal device may be a device deployed on land, for example, an indoor device or an outdoor device, a handheld device, or a vehicle-mounted device, a device deployed on a water (for example, on a ship), or a device deployed in the air (for example, on an airplane, a balloon, or a satellite). The terminal device may be user equipment (UE, User Equipment). The UE includes a handheld device, a vehicle-mounted device, a wearable device, a compute device, or another device that has a wireless communication function. For example, the UE may be a mobile phone, a tablet computer, a computer having a wireless transceiver function, or the like. In addition, the terminal device may be, for example, a virtual reality (VR, virtual reality) terminal device, an augmented reality (AR, augmented reality) terminal device, a wireless terminal in industrial control, a wireless terminal in self-driving, a wireless terminal in telemedicine, a wireless terminal in a smart grid, a wireless terminal in a smart city (smart city), or a wireless terminal in a smart home (smart home). In embodiments of this application, an apparatus configured to implement a function of the terminal may be a terminal; or may be an apparatus that can support the terminal in implementing the function, for example, a chip system. The apparatus may be installed in the terminal.

In embodiments of this application, the chip system may include a chip, or may include a chip and another discrete component. In the technical solutions provided in embodiments of this application, the apparatus configured to implement the function of the terminal is a terminal. For ease of description, the terminal is collectively referred to as UE in the following. Therefore, the UE in embodiments of this application may be in various product forms that implement the function of the terminal.

The access network device, for example, a base station (BS, base station), in embodiments of this application is a device that is deployed in a radio access network and can perform wireless communication with the UE. The base station may be in a plurality of forms, for example, a macro base station, a micro base station, a relay station, and an access point. The base station in embodiments of this application may be a 5G base station or an evolved NodeB (Evolved NodeB) in LTE. The 5G base station may also be referred to as a transmission reception point (TRP, Transmission Reception Point) or a gNB (Next-Generation NodeB). In embodiments of this application, an apparatus configured to implement a function of a network device may be a network device, or may be an apparatus (for example, a chip system) that can support the network device in implementing the function. The apparatus may be installed in the network device. For ease of description, the access network device is collectively referred to as a base station in the following. Therefore, the base station in embodiments of this application may be in various product forms that implement a function of the access network device.

In embodiments of this application, the term "wireless communication" may also be briefly referred to as "communication", and the term "communication" may also be referred as "data transmission", "information transmission", "signal transmission", or the like.

The following describes the solutions in embodiments of this application by using examples.

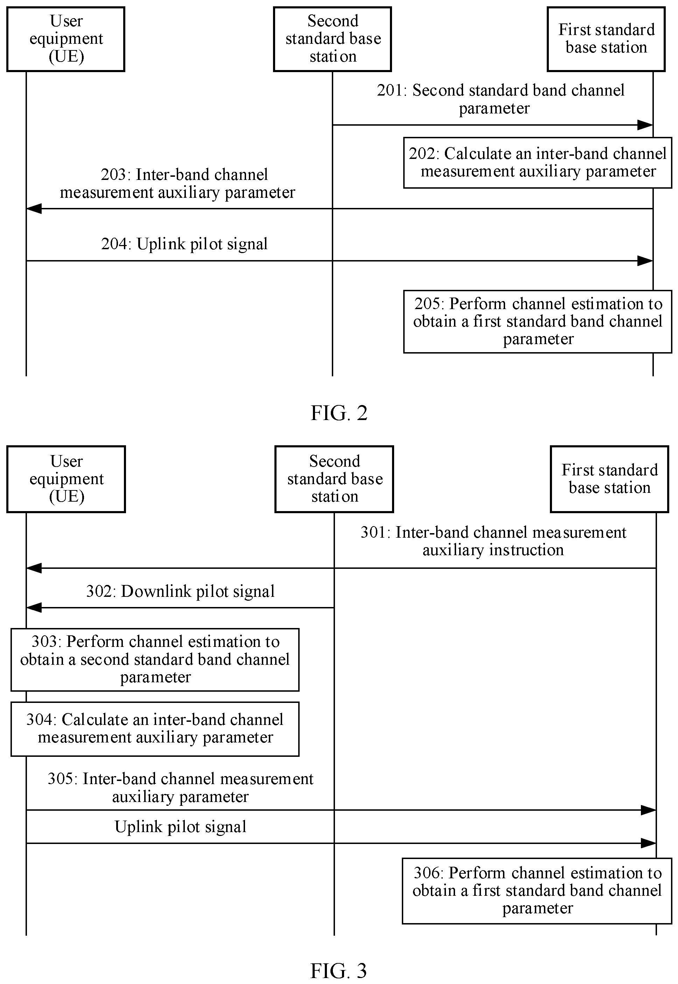

FIG. 2 is a schematic flowchart of a communication method according to an embodiment of this application. As shown in FIG. 2, in an example, the communication method may include the following steps.

201: A second standard base station sends a second standard band channel parameter to a first standard base station.

The second standard base station may, for example, perform channel estimation by using an uplink pilot signal sent by user equipment (for example, through a second standard band uplink channel) to obtain the second standard band channel parameter.

The second standard base station may send, for example, the second standard band channel parameter to the first standard base station by using Secondary Node Modification signaling of an Xn interface. That is, the second standard band channel parameter may be, for example, carried in the Secondary Node Modification signaling sent by the second standard base station to the first standard base station.

202: The first standard base station receives the second standard band channel parameter from the second standard base station; and the first standard base station calculates an inter-band channel measurement auxiliary parameter by using the second standard band channel parameter from the second standard base station.

203: The first standard base station sends the inter-band channel measurement auxiliary parameter obtained through calculation to the user equipment.

In some possible implementations, before that the first standard base station sends the inter-band channel measurement auxiliary parameter to the user equipment, the method further includes: determining, based on a first standard band channel parameter and the second standard band channel parameter that is from the second standard base station, that a correlation between a first standard band channel and a second standard band channel satisfies a preset condition (where the preset condition may include, for example, that the correlation between the first standard band channel and the second standard band channel is greater than or equal to a threshold). Certainly, the first standard base station may alternatively determine, in other manners, that the correlation between the first standard band channel and the second standard band channel satisfies the preset condition. Alternatively, the first standard base station may even consider by default that the correlation between the first standard band channel and the second standard band channel satisfies the preset condition, and directly send the inter-band channel measurement auxiliary parameter obtained through calculation to the user equipment. That is, before sending the inter-band channel measurement auxiliary parameter obtained through calculation to the user equipment, the first standard base station does not perform an operation of determining that the correlation between the first standard band channel and the second standard band channel satisfies the preset condition.

204: The user equipment receives the inter-band channel measurement auxiliary parameter sent by the first standard base station, and the user equipment sends an uplink sparse pilot signal (where for example, the uplink pilot signal is the uplink sparse pilot signal) to the first standard base station with reference to the inter-band channel measurement auxiliary parameter, where the uplink sparse pilot signal is used for performing channel estimation to obtain the first standard band channel parameter.

205: The first standard base station receives the uplink sparse pilot signal sent by the user equipment with reference to the inter-band channel measurement auxiliary parameter, and the first standard base station performs channel estimation by using the uplink sparse pilot signal and the inter-band channel measurement auxiliary parameter to obtain the first standard band channel parameter.

In some possible implementations, the first standard base station may further receive an inter-band channel auxiliary measurement capability indication sent by the second standard base station or the user equipment, where the inter-band channel auxiliary measurement capability indication indicates that the user equipment has an inter-band channel auxiliary measurement capability.

It may be understood that the first standard base station may learn, based on the received inter-band channel auxiliary measurement capability indication, that the user equipment has the inter-band channel auxiliary measurement capability. Certainly, the first standard base station may alternatively learn, in other manners, whether the user equipment has the inter-band channel auxiliary measurement capability.

Alternatively, if the user equipment has the inter-band channel auxiliary measurement capability by default, the step of sending, by the second standard base station or the user equipment, the inter-band channel auxiliary measurement capability indication to the first standard base station may be omitted.

In some possible implementations, the first standard base station may further receive at least one of the following parameters that are sent by the second standard base station or the user equipment and that are used for calculating the inter-band channel measurement auxiliary parameter: a second standard band, an array element location parameter of the second standard band, a first standard band, and an array element location parameter of the first standard band.

In some possible implementations, the first standard base station may be a 6G base station, and the second standard base station may be a 5G base station. Certainly, the first standard base station and the first standard base station may alternatively be base stations in communication systems of other different standards.

It can be learned that, in the solution of this embodiment of this application, an inter-band channel measurement auxiliary parameter is obtained based on a correlation between channels of bands used by different standards and by using the second standard band channel parameter, to assist the first standard base station in reducing overheads related to channel measurement, thereby helping improve a capacity and experience of a first standard system.

FIG. 3 is a schematic flowchart of another communication method according to an embodiment of this application. As shown in FIG. 3, in an example, the another communication method may include the following steps.

301: A first standard base station sends an inter-band channel measurement auxiliary instruction to user equipment, where the inter-band channel measurement auxiliary instruction is used for instructing the user equipment to calculate an inter-band channel measurement auxiliary parameter.

In some possible implementations, before that the first standard base station sends the inter-band channel measurement auxiliary instruction to the user equipment, the method further includes: determining, based on a first standard band channel parameter and a second standard band channel parameter that is from a second standard base station, that a correlation between a first standard band channel and a second standard band channel satisfies a preset condition (where the preset condition may include, for example, that the correlation between the first standard band channel and the second standard band channel is greater than or equal to a threshold). Certainly, the first standard base station may alternatively determine, in other manners, that the correlation between the first standard band channel and the second standard band channel satisfies the preset condition. Alternatively, the first standard base station may even consider by default that the correlation between the first standard band channel and the second standard band channel satisfies the preset condition, and directly send the inter-band channel measurement auxiliary parameter obtained through calculation to the user equipment. That is, before sending the inter-band channel measurement auxiliary parameter obtained through calculation to the user equipment, the first standard base station does not perform an operation of determining that the correlation between the first standard band channel and the second standard band channel satisfies the preset condition.

In some possible implementations, the first standard base station may further receive an inter-band channel auxiliary measurement capability indication sent by the second standard base station or the user equipment, where the inter-band channel auxiliary measurement capability indication indicates that the user equipment has an inter-band channel auxiliary measurement capability.

It may be understood that the first standard base station may learn, based on the received inter-band channel auxiliary measurement capability indication, that the user equipment has the inter-band channel auxiliary measurement capability. Certainly, the first standard base station may alternatively learn, in other manners, whether the user equipment has the inter-band channel auxiliary measurement capability.

Alternatively, if the user equipment has the inter-band channel auxiliary measurement capability by default, the step of sending, by the second standard base station or the user equipment, the inter-band channel auxiliary measurement capability indication to the first standard base station may be omitted.

302: The user equipment receives the inter-band channel measurement auxiliary instruction from the first standard base station, and the user equipment further receives a downlink pilot signal sent by the second standard base station.

303: The user equipment performs channel estimation by using the downlink pilot signal to obtain the second standard band channel parameter.

304: The user equipment calculates the inter-band channel measurement auxiliary parameter by using the second standard band channel parameter.

305: The user equipment sends the inter-band channel measurement auxiliary parameter to the first standard base station, and sends an uplink sparse pilot signal (where for example, an uplink pilot signal is the uplink sparse pilot signal) to the first standard base station with reference to the inter-band channel measurement auxiliary parameter.

306: The first standard base station receives the uplink sparse pilot signal and the inter-band channel measurement auxiliary parameter that are sent by the user equipment, where the first standard base station performs channel estimation by using the uplink sparse pilot signal and the inter-band channel measurement auxiliary parameter to obtain the first standard band channel parameter.

In some possible implementations, the first standard base station may be a 6G base station, and the second standard base station may be a 5G base station. Certainly, the first standard base station and the first standard base station may alternatively be base stations in communication systems of other different standards.

It can be learned that, in the solution of this embodiment of this application, an inter-band channel measurement auxiliary parameter is obtained based on a correlation between channels of bands used by different standards and by using the second standard band channel parameter, to assist the first standard base station in reducing overheads related to channel measurement, thereby helping improve a capacity and experience of a first standard system.

The following uses an example in which the first standard base station is a 6G base station and the second standard base station is a 5G base station for description. A scenario in which the first standard base station and the first standard base station are base stations in other different standard systems may be deduced by analogy.

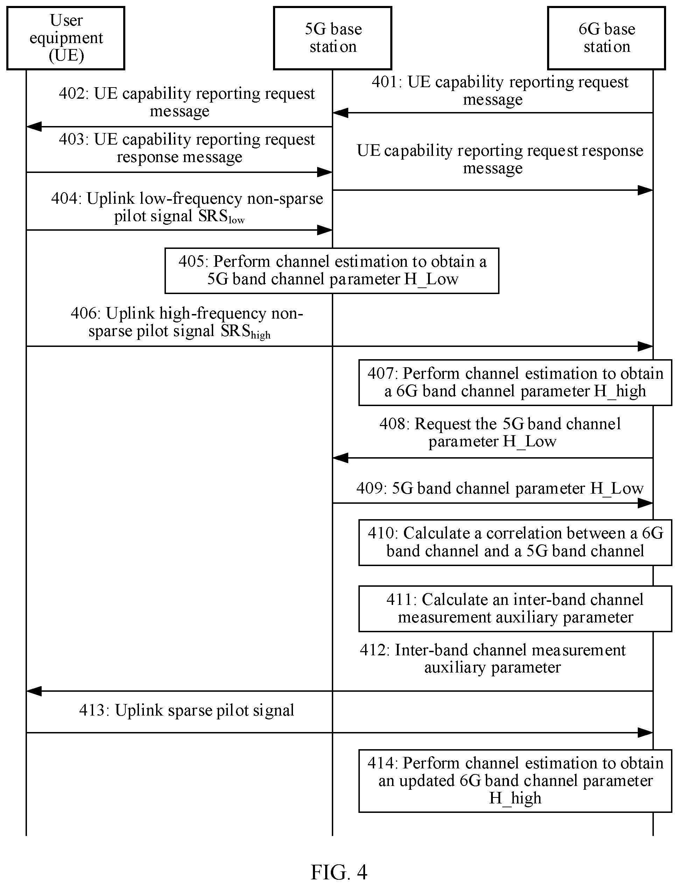

FIG. 4 is a schematic flowchart of another communication method according to an embodiment of this application. As shown in FIG. 4, in an example, the another communication method may include the following steps.

401: A 6G base station sends a UE capability reporting request message to a 5G base station.

402: After receiving the UE capability reporting request message from the 6G base station, the 5G base station forwards the UE capability reporting request message to UE.

403: After receiving the UE capability reporting request message forwarded by the 5G base station, the UE sends a UE capability reporting request response message to the 5G base station. The 5G base station forwards the UE capability reporting request response message to the 6G base station.

The UE capability reporting request response message carries an inter-band channel auxiliary measurement capability indication, and the inter-band channel auxiliary measurement capability indication indicates whether the UE has an inter-band channel auxiliary measurement capability. The 6G base station may learn, based on the received inter-band channel auxiliary measurement capability indication, whether the UE has the inter-band channel auxiliary measurement capability.

In some possible implementations, the UE capability reporting request message may further carry at least one of the following parameters used for calculating an inter-band channel measurement auxiliary parameter: a 5G band, an array element location parameter of the 5G band, a 6G band, and an array element location parameter of the 6G band.

In some possible implementations, the 6G base station may learn of a capability of the UE (including the inter-band channel auxiliary measurement capability of the UE and the like) through, for example, an SgNB addition request procedure or another interaction procedure.

Alternatively, a radio resource control (Radio Resource Control, RRC) connection may be established between the 6G base station and the UE, and the UE may report the capability of the UE to the 6G base station through the RRC connection. In this case, the 5G base station may not need to forward a message that is related to UE capability reporting and that is exchanged between the 6G base station and the UE.

404: The UE sends an uplink low-frequency non-sparse pilot signal SRS_{low} to the 5G base station through a 5G band uplink channel.

405: The 5G base station receives the uplink low-frequency non-sparse pilot signal SRS_{low} from the UE, and performs channel estimation by using the uplink low-frequency non-sparse pilot signal SRS_{low} to obtain a 5G band uplink channel parameter H_Low.

406: The UE sends an uplink high-frequency non-sparse pilot signal SRS_{high} to the 6G base station through a 6G band uplink channel.

407: The 6G base station receives the uplink high-frequency non-sparse pilot signal SRS_{high} from the UE, and performs channel estimation by using the uplink high-frequency non-sparse pilot signal SRS_{high} to obtain a 6G band (uplink/downlink) channel parameter H_high.

408: The 6G base station requests, from the 5G base station, a 5G band (uplink/downlink) channel parameter H_Low obtained through channel estimation.

409: The 5G base station sends the 5G band (uplink/downlink) channel parameter H_Low obtained through channel estimation to the 6G base station.

In some possible implementations, the 5G base station may send, for example, the 5G band uplink channel parameter to the 6G base station by using Secondary Node Modification signaling of an Xn interface. That is, the 5G band uplink channel parameter may be carried, for example, in the Secondary Node Modification signaling sent by the 5G base station to the 6G base station.

410: The 6G base station calculates a correlation between a 6G band channel and a 5G band channel by using the 6G band (uplink/downlink) channel parameter H_high and the 5G band (uplink/downlink) channel parameter H_Low from the 5G base station.

411: If the correlation between the 6G band channel and the 5G band channel is greater than or equal to a threshold, the 6G base station calculates the inter-band channel measurement auxiliary parameter by using the 5G band (uplink/downlink) channel parameter H_Low from the 5G base station.

In some possible implementations, at least one of the following parameters may be further used for calculating the inter-band channel measurement auxiliary parameter: a 5G band, an array element location parameter of the 5G band, a 6G band, and an array element location parameter of the 6G band.

412: The 6G base station sends the inter-band channel measurement auxiliary parameter obtained through calculation to the UE.

413: The UE receives the inter-band channel measurement auxiliary parameter sent by the 6G base station, and the UE sends an uplink sparse pilot signal to the 6G base station with reference to the inter-band channel measurement auxiliary parameter.

414: The 6G base station receives the uplink sparse pilot signal sent by the UE with reference to the inter-band channel measurement auxiliary parameter, and the 6G base station performs channel estimation by using the uplink sparse pilot signal and the inter-band channel measurement auxiliary parameter to obtain an updated 6G band channel parameter H_high (for example, a 6G band uplink/downlink channel parameter).

It can be learned that, in the solution of this embodiment of this application, an inter-band channel measurement auxiliary parameter is obtained based on a correlation between channels of bands used in 5G and 6G and by using the 5G band channel parameter, to assist the 6G base station in reducing overheads related to channel measurement, thereby helping improve a capacity and experience of a 6G system.

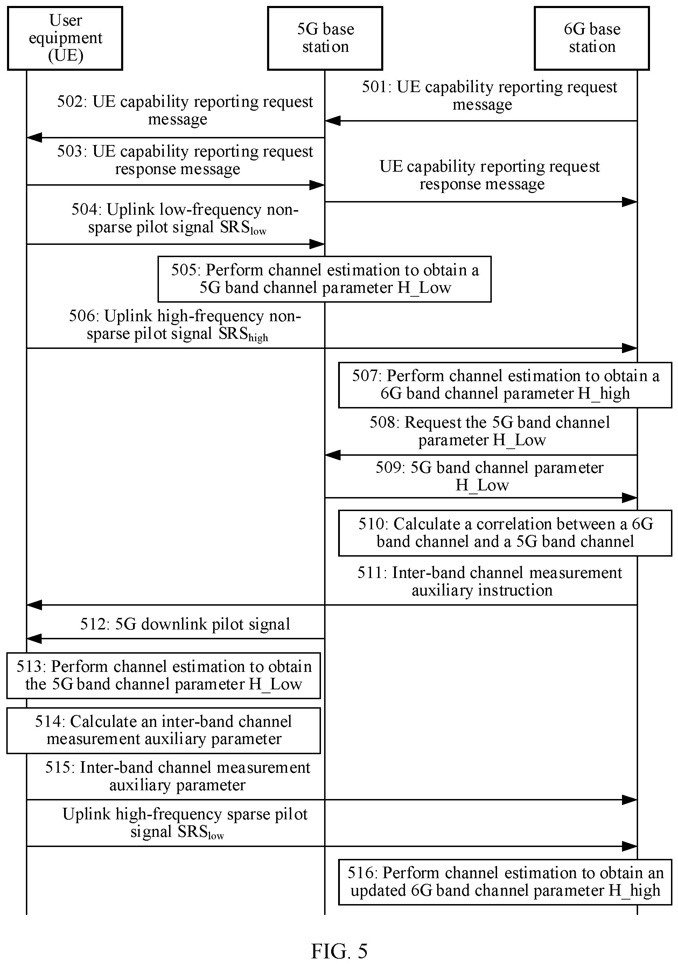

FIG. 5 is a schematic flowchart of another communication method according to an embodiment of this application. As shown in FIG. 5, in an example, the another communication method may include the following steps.

501: A 6G base station sends a UE capability reporting request message to a 5G base station.

502: After receiving the UE capability reporting request message from the 6G base station, the 5G base station forwards the UE capability reporting request message to UE.

503: After receiving the UE capability reporting request message forwarded by the 5G base station, the UE sends a UE capability reporting request response message to the 5G base station. The 5G base station forwards the UE capability reporting request response message to the 6G base station.

The UE capability reporting request response message carries an inter-band channel auxiliary measurement capability indication, and the inter-band channel auxiliary measurement capability indication indicates whether the UE has an inter-band channel auxiliary measurement capability. The 6G base station may learn, based on the received inter-band channel auxiliary measurement capability indication, whether the UE has the inter-band channel auxiliary measurement capability.

In some possible implementations, the UE capability reporting request message may further carry at least one of the following parameters used for calculating an inter-band channel measurement auxiliary parameter: a 5G band, an array element location parameter of the 5G band, a 6G band, and an array element location parameter of the 6G band.

In some possible implementations, the 6G base station may learn of a capability of the UE (including the inter-band channel auxiliary measurement capability of the UE and the like) through, for example, an SgNB addition request procedure or another interaction procedure.

Alternatively, a radio resource control (Radio Resource Control, RRC) connection may be established between the 6G base station and the UE, and the UE may report the capability of the UE to the 6G base station through the RRC connection. In this case, the 5G base station may not need to forward a message that is related to UE capability reporting and that is exchanged between the 6G base station and the UE.

504: The UE sends an uplink low-frequency non-sparse pilot signal SRS_{low} to the 5G base station through a 5G band uplink channel.

505: The 5G base station receives the uplink low-frequency non-sparse pilot signal SRS_{low} from the UE, and performs channel estimation by using the uplink low-frequency non-sparse pilot signal SRS_{low} to obtain a 5G band uplink channel parameter H_Low.

506: The UE sends an uplink high-frequency non-sparse pilot signal SRS_{high} to the 6G base station through a 6G band uplink channel.

507: The 6G base station receives the uplink high-frequency non-sparse pilot signal SRS_{high} from the UE, and performs channel estimation by using the uplink high-frequency non-sparse pilot signal SRS_{high} to obtain a 6G band uplink channel parameter H_high.

508: The 6G base station requests, from the 5G base station, the 5G band uplink channel parameter H_Low obtained through channel estimation.

509: The 5G base station sends the 5G band uplink channel parameter H_Low obtained through channel estimation to the 6G base station.

In some possible implementations, the 5G base station may send, for example, the 5G band uplink channel parameter to the 6G base station by using Secondary Node Modification signaling of an Xn interface. That is, the 5G band uplink channel parameter may be carried, for example, in the Secondary Node Modification signaling sent by the 5G base station to the 6G base station.

510: The 6G base station calculates a correlation between a 6G band channel and a 5G band channel by using a 6G band (uplink/downlink) channel parameter H_high and a 5G band (uplink/downlink) channel parameter H_Low from the 5G base station.

511: If the correlation between the 6G band channel and the 5G band channel is greater than or equal to a threshold, the 6G base station sends an inter-band channel measurement auxiliary instruction to the UE.

512: The UE receives the inter-band channel measurement auxiliary instruction from the 6G base station, and the UE further receives a 5G downlink low-frequency pilot signal CSI-RS_{low} sent by the 5G base station.

513: The UE performs channel estimation by using the 5G downlink low-frequency pilot signal CSI-RS_{low} to obtain the 5G band (uplink/downlink) channel parameter H_Low.

514: The UE calculates the inter-band channel measurement auxiliary parameter by using the 5G band (uplink/downlink) channel parameter H_Low obtained through channel estimation.

In some possible implementations, at least one of the following parameters may be further used for calculating the inter-band channel measurement auxiliary parameter: a 5G band, an array element location parameter of the 5G band, a 6G band, and an array element location parameter of the 6G band.

515: The UE sends the inter-band channel measurement auxiliary parameter to the 6G base station, and sends an uplink sparse pilot signal SRS_{low} to the 6G base station with reference to the inter-band channel measurement auxiliary parameter.

516: The 6G base station receives the uplink sparse pilot signal and the inter-band channel measurement auxiliary parameter that are sent by the UE, and the 6G base station performs channel estimation by using the uplink sparse pilot signal and the inter-band channel measurement auxiliary parameter to obtain an updated 6G band channel parameter H_high (for example, a 6G band uplink/downlink channel parameter).

It can be learned that, in the solution of this embodiment of this application, an inter-band channel measurement auxiliary parameter is obtained based on a correlation between channels of bands used in 5G and 6G and by using the 5G band channel parameter, to assist the 6G base station in reducing overheads related to channel measurement, thereby helping improve a capacity and experience of a 6G system.

The following provides a possible implementation in which an inter-band channel measurement auxiliary parameter *V* may be calculated by using a second standard band channel parameter *hₗ* (for example, a 5G band channel parameter), a second standard band (for example, a 5G band), and an array element location parameter of the second standard band *Cₗ* (for example, an array element location parameter of the 5G band).

The second standard band channel parameter *hₗ* may be expressed as ${h}_{l} = {\sum }_{k = 1}^{K} {g}_{k} a \left({θ}_{k}\right)$ , a channel includes K paths, *gₖ* represents a complex gain of a k^{th} path, *θₖ* is an angle of arrival/an angle of departure of the k^{th} path, and *a*(*θₖ*) represents an array steering vector of the k^{th} path.

Further, *hₗ* may be expressed in a matrix form of *hₗ = Agₗ,* where *A =* [*a*(*θ*₁),...*,a*(*θₖ*)]. A represents an array steering vector set (also referred to as an array steering vector matrix) corresponding to the second standard band.

Jacobi-Anger approximation decomposition is performed on the array steering vector set *A,* to decompose the array steering vector set A into a product of an array element location parameter *Cₗ* and the inter-band channel measurement auxiliary parameter *V.*

First, one element [*a*(*θₖ*)]ₙ in the array steering vector *a*(*θₖ*) may be decomposed as follows: $\begin{matrix}{\left[a\left({θ}_{k}\right)\right]}_{n} \approx {\sum }_{i = - I}^{I} {j}^{i} {J}_{i} \left(2π\frac{{r}_{n}}{λ}\right) {e}^{- {jϕ}_{n} i} {e}^{{jθ}_{k} i} \\ = {c}_{n}^{T} υ \left({θ}_{k}\right)\end{matrix}$${\left[{c}_{n}\right]}_{i} = {j}^{i} {J}_{i} \left(2π\frac{{r}_{n}}{λ}\right) {e}^{- {jϕ}_{n} i}$, and the array element location parameter is included.

[*v*(*θₖ*)]*ᵢ* = *e^{jθkⁱ}*, and channel path cluster parameters are included.

i = - *I*,...,*I*, and $I > \frac{2 π}{λ} {r}_{max}$.

Further, the array steering vector *a*(*θₖ*) may be expressed as *a*(*θₖ*) *= Cₗv*(*θₖ*), where *Cₗ =* [*c*₁,*...,c_{N}*]*^{T}* represents the array element location parameter of the second standard band.

Further, the array steering vector set A may be expressed as *A = CₗV,* where *V* = [*v*(*θ*₁),...,*v*(*θₖ*)] represents the inter-band channel measurement auxiliary parameter.

Therefore, the second standard band channel parameter ***h**ₗ* may be further expressed as ***h**ₗ = **Ag**ₗ = **CₗVg**ₗ.* Because ***h**ₗ* and ***Cₗ*** are known, the inter-band channel measurement auxiliary parameter ***V*** may be obtained.

That is, that the inter-band channel measurement auxiliary parameter *V* is calculated by using the second standard band channel parameter *hₗ,* the second standard band, and the array element location parameter *Cₗ* of the second standard band may include the following:
First, an equivalent channel ${h}_{e} = {C}_{l}^{- 1} {h}_{l} = {Vg}_{l}$ of the second standard band channel is calculated.

Then, a covariance matrix $R = {h}_{e} {h}_{e}^{H} = {VR}_{{g}_{l}} {V}^{H}$ of the equivalent channel is calculated.

Then, eigenvalue decomposition is performed on the covariance matrix R of the equivalent channel to obtain the inter-band channel measurement auxiliary parameter V.

It should be noted that the foregoing manner of calculating the inter-band channel measurement auxiliary parameter V is merely an example of a possible implementation. In specific practice, another calculation manner may alternatively be used, and examples are not provided one by one herein.

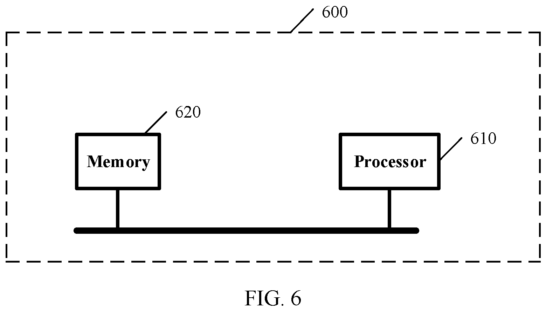

Refer to FIG. 6. An embodiment of this application further provides a communication device 600. The communication device may include:
a processor 610 and a memory 620 that are coupled to each other, where the processor is configured to invoke a program stored in the memory, to implement some or all steps of any method according to embodiments of this application.

An embodiment of this application further provides a computer-readable storage medium. The computer-readable storage medium stores a computer program. When the computer program is executed by hardware (for example, a processor), some or all steps of any method according to embodiments of this application can be completed.

An embodiment of this application further provides a computer-readable storage medium. The computer-readable storage medium stores a computer program. The computer program is executed by hardware (for example, a processor) to implement some or all steps of any method according to embodiments of this application performed by any device.

An embodiment of this application further provides a computer program product including instructions. When the computer program product is run on a computer device, the computer device is caused to perform some or all steps of any method according to embodiments of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, an optical disc), a semiconductor medium (for example, a solid-state drive), or the like. In the foregoing embodiments, the description of each embodiment has respective focuses. For a part that is not described in detail in an embodiment, refer to related descriptions in other embodiments.

In the several embodiments provided in this application, it should be understood that the disclosed apparatus may alternatively be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual indirect couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, in other words, may be located in one position, or may be distributed on a plurality of network units. Some or all of the units may be selected according to actual needs to achieve the objectives of the solutions of embodiments.

Functional units in embodiments of this application may be integrated into one processing unit, each of the units may exist alone physically, or two or more units are integrated into one unit. The integrated unit may be implemented in the form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to a conventional technology, or all or some of the technical solutions may be implemented in a form of a software product. The computer software product is stored in a storage medium and includes several instructions for instructing a computer device (which for example, may be a personal computer, a server, or a network device) to perform all or some steps of the method described in embodiments of this application. The foregoing storage medium may include, for example, any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving, by a first standard base station, a second standard band channel parameter from a second standard base station;
calculating, by the first standard base station, an inter-band channel measurement auxiliary parameter by using the second standard band channel parameter;
sending, by the first standard base station, the inter-band channel measurement auxiliary parameter to user equipment; receiving, by the first standard base station, an uplink pilot signal sent by the user equipment with reference to the inter-band channel measurement auxiliary parameter; and
performing, by the first standard base station, channel estimation by using the uplink pilot signal and the inter-band channel measurement auxiliary parameter to obtain a first standard band channel parameter.

2. The method according to claim 1, wherein the method further comprises: receiving, by the first standard base station, an inter-band channel auxiliary measurement capability indication sent by the second standard base station or the user equipment, wherein the inter-band channel auxiliary measurement capability indication indicates that the user equipment has an inter-band channel auxiliary measurement capability.

3. The method according to claim 1 or 2, wherein the method further comprises:
receiving, by the first standard base station, at least one of the following parameters that are sent by the second standard base station or the user equipment and that are used for calculating the inter-band channel measurement auxiliary parameter: a second standard band, an array element location parameter of the second standard band, a first standard band, and an array element location parameter of the first standard band.

4. The method according to any one of claims 1 to 3, wherein before the sending, by the first standard base station, the inter-band channel measurement auxiliary parameter to the user equipment, the method further comprises: determining, based on the first standard band channel parameter and the second standard band channel parameter that is from the second standard base station, that a correlation between a first standard band channel and a second standard band channel satisfies a preset condition.

5. The method according to any one of claims 1 to 4, wherein the first standard base station is a 6G base station, and the second standard base station is a 5G base station.

6. A communication method, comprising:
receiving, by user equipment, an inter-band channel measurement auxiliary parameter sent by a first standard base station, wherein the inter-band channel measurement auxiliary parameter is obtained through calculation by using a second standard band channel parameter; and
sending, by the user equipment, an uplink pilot signal to the first standard base station with reference to the inter-band channel measurement auxiliary parameter, wherein the uplink pilot signal is used for performing channel estimation to obtain a first standard band channel parameter.

7. The method according to claim 6, wherein before the receiving, by the user equipment, the inter-band channel measurement auxiliary parameter sent by the first standard base station, the method further comprises: sending, by the user equipment, an inter-band channel auxiliary measurement capability indication to the first standard base station, wherein the inter-band channel auxiliary measurement capability indication indicates that the user equipment has an inter-band channel auxiliary measurement capability.

8. The method according to claim 6 or 7, wherein the method further comprises: sending, by the user equipment to the first standard base station, at least one of the following parameters that are used for calculating the inter-band channel measurement auxiliary parameter: a second standard band, an array element location parameter of the second standard band, a first standard band, and an array element location parameter of the first standard band.

9. The method according to any one of claims 6 to 8, wherein a correlation between a first standard band channel and a second standard band channel satisfies a preset condition.

10. A communication method, comprising:
sending, by a first standard base station, an inter-band channel measurement auxiliary instruction to user equipment, wherein the inter-band channel measurement auxiliary instruction is used for instructing the user equipment to calculate an inter-band channel measurement auxiliary parameter;
receiving, by the first standard base station, an uplink pilot signal and the inter-band channel measurement auxiliary parameter that are sent by the user equipment; and
performing, by the first standard base station, channel estimation by using the uplink pilot signal and the inter-band channel measurement auxiliary parameter to obtain a first standard band channel parameter.

11. The method according to claim 10, wherein the method further comprises: receiving, by the first standard base station, an inter-band channel auxiliary measurement capability indication sent by a second standard base station or the user equipment, wherein the inter-band channel auxiliary measurement capability indication indicates that the user equipment has an inter-band channel auxiliary measurement capability.

12. The method according to claim 10 or 11, wherein before the sending, by the first standard base station, the inter-band channel measurement auxiliary instruction to the user equipment, the method further comprises:
receiving, by the first standard base station, a second standard band channel parameter from the second standard base station; and
determining, based on the first standard band channel parameter and the second standard band channel parameter that is from the second standard base station, that a correlation between a first standard band channel and a second standard band channel satisfies a preset condition.

13. The method according to claim 12, wherein the first standard base station is a 6G base station, and the second standard base station is a 5G base station.

14. A communication method, comprising:
receiving, by user equipment, an inter-band channel measurement auxiliary instruction sent by a first standard base station, wherein the inter-band channel measurement auxiliary instruction is used for instructing the user equipment to calculate an inter-band channel measurement auxiliary parameter;
receiving, by the user equipment, a downlink pilot signal sent by a second standard base station;
performing, by the user equipment, channel estimation by using the downlink pilot signal to obtain a second standard band channel parameter;
calculating, by the user equipment, the inter-band channel measurement auxiliary parameter by using the second standard band channel parameter; and
sending, by the user equipment, a pilot signal and the inter-band channel measurement auxiliary parameter to the first standard base station, wherein the pilot signal and the inter-band channel measurement auxiliary parameter are used for performing channel estimation to obtain a first standard band channel parameter.

15. The method according to claim 14, wherein
before the receiving, by the user equipment, the inter-band channel measurement auxiliary instruction sent by the first standard base station, the method further comprises: sending, by the user equipment, an inter-band channel auxiliary measurement capability indication to the first standard base station, wherein the inter-band channel auxiliary measurement capability indication indicates that the user equipment has an inter-band channel auxiliary measurement capability.

16. The method according to claim 14 or 15, wherein a correlation between a first standard band channel and a second standard band channel satisfies a preset condition.

17. A communication device, comprising a processor and a memory that are coupled to each other, wherein the processor is configured to invoke a program stored in the memory, to implement the method according to any one of claims 1 to 16.

18. A communication chip, wherein the communication chip is configured to implement the method according to any one of claims 1 to 16.

19. A computer-readable storage medium, wherein the computer-readable storage medium stores a program, and when the program is run on a computer, the computer is caused to perform the method according to any one of claims 1 to 16.

20. A computer program product, wherein the computer program product comprises a computer program, and when the computer program is run on a computer, the computer is caused to perform the method according to any one of claims 1 to 16.
